# EUROPEAN PATENT SPECIFICATION

(11) **EP 3 460 263 B1**
(45) Date of publication and mention of the grant of the patent: **04.03.2020**
(21) Application number: 18188382.8
(22) Date of filing: 10.08.2018
(51) Int. Cl.: F16B 25/00

(54) **SPEEDY-SCREWING SCREW**
SCHNELLSCHRAUBE
VIS À VISSAGE RAPIDE

(30) Priority: 21.09.2017 TW 106214051 U
(43) Date of publication of application: 27.03.2019
(73) Proprietor: Taiwan Shan Yin International Co., Ltd., Kaohsiung City 806 (TW)
(72) Inventor: Su, Kou-Tsair, 806 Kaohsiung City (TW); Su, Yu-Jung, 806 Kaohsiung City (TW)
(74) Representative: Cabinet Chaillot

(56) References cited:
- EP-A1- 1 820 978
- EP-A1- 2 326 848
- EP-A1- 2 735 746

## Description

### BACKGROUND OF THE INVENTION

### 1. Field of the Invention

This invention relates to a speedy-screwing screw.

### 2. Description of the Related Art

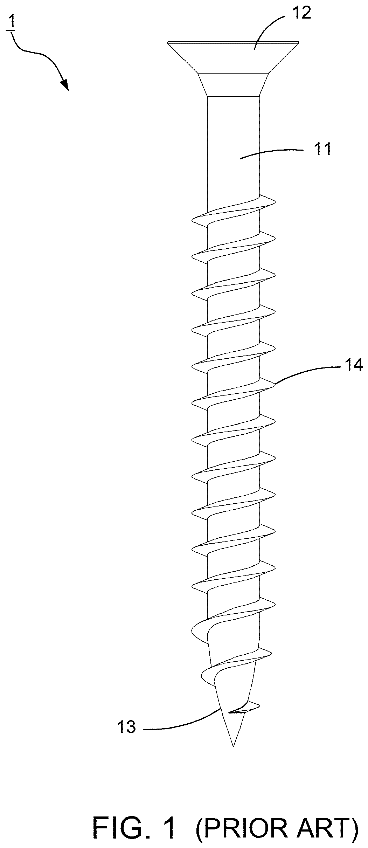

Referring to Fig. **1**, a conventional screw **1** comprises a shank **11**, a head **12** fitted on the shank **11**, a tapered drilling portion **13** opposite to the head **12**, and a plurality of threads **14** spirally fitted on the shank **11.** During a screwing operation, the drilling portion **13** is situated at a surface of a wood board (not shown). The head **12** then receives a rotational force in order that the threads **14** is driven by the rotational force to cut the wood board. With the cutting action of the threads **14**, the drilling portion **13** and the shank **11** further thread into the wood board gradually to complete the screwing operation of the screw **1**.

However, the disclosed screw **1** still has problems. During the screwing operation, the screw **1** relies on the threads **14** to execute the cutting action of the wood board. However, the wood board is composed of a plurality of elastic wood fibers. The threads **14** are unable to serve the wood fibers effectively during the screwing operation. Meanwhile, instead of excluding outwards, the unserved wood fibers accumulate between the threads **14** unduly to further hinder the screwing operation. In addition, some unserved wood fibers entangle around the shank **11** and the drilling portion **13** to result in the increasing drilling resistance. Accordingly, the screwing operation of the screw **1** is not smooth and slowed down. Moreover, the entanglement of the wood fibers hinders debris incurred by the cutting action of the threads **14** from excluding outwards . Furthermore, the wood board may crack if the screw **1** keeps screwing downwards and pressing the accumulated debris. Thus, the screw **1** still needs to be improved. EP 2 326 848 B1 discloses a screw having auxiliary threads. EP 2 735 746 A1 discloses a screw with a toothed structure.

### SUMMARY OF THE INVENTION

The object of this invention is to provide a speedy-screwing screw capable of serving wood fibers effectively to reduce the drilling resistance and attain a quick screwing effect.

The speedy-screwing screw of this invention comprises a shank, a head fitted at one end of the shank, a drilling portion fitted at another end of the shank and opposite to the head, a plurality of main threads spiraled on the shank, and a plurality of auxiliary threads extending in a second direction opposite to a first direction of the main threads. A main diameter of the main threads is larger than an auxiliary diameter of the auxiliary threads. Each auxiliary thread has a plurality of cutting sections. Each cutting section has two flank surfaces facing the head and the drilling portion respectively and a crest formed at a junction of the flank surfaces. Adjoining flank surfaces which face the same direction are connected continuously in reverse curves to form the wavelike crests. During a screwing operation, the main threads execute the main cutting action. Simultaneously, the auxiliary threads push and then break wood fibers of a wood object effectively, thereby providing a dual cutting effect to prevent the shank and the drilling portion from being entangled in wood fibers, and reduce the drilling resistance effectively. Moreover, debris can be excluded outwards through the main threads and the auxiliary threads, thereby preventing the debris from accumulating, preventing the wood object from cracking owing to the accumulated debris, and accelerating the screwing operation greatly.

Preferably, at least one of the main threads is provided with at least one slot.

Preferably, the auxiliary threads have continuous convolutions spiraling in the second direction.

Preferably, each auxiliary thread extends slantingly between two adjoining main threads.

### BRIEF DESCRIPTION OF THE DRAWINGS

Fig. **1** is a schematic view showing a conventional screw;
Fig. **2** is a schematic view showing a first preferred embodiment of this invention characterized by each auxiliary thread extends slantingly between main threads;
Fig. **2A** is an enlarged view showing a partial element of Fig. 2;
Fig. **3** is a schematic view showing the auxiliary threads are formed in continuous convolutions.
Fig. **4** is a schematic view showing a screwing operation of the first preferred embodiment of this invention;
Fig. **5** is a schematic view showing a second preferred embodiment of this invention characterized by a plurality of slots formed on the main threads; and
Fig. **6** is a schematic view showing a plurality of slots formed on the main threads and the auxiliary threads formed in connective convolutions.

### DETAILED DESCRIPTION OF THE PREFERRED EMBODIMENTS

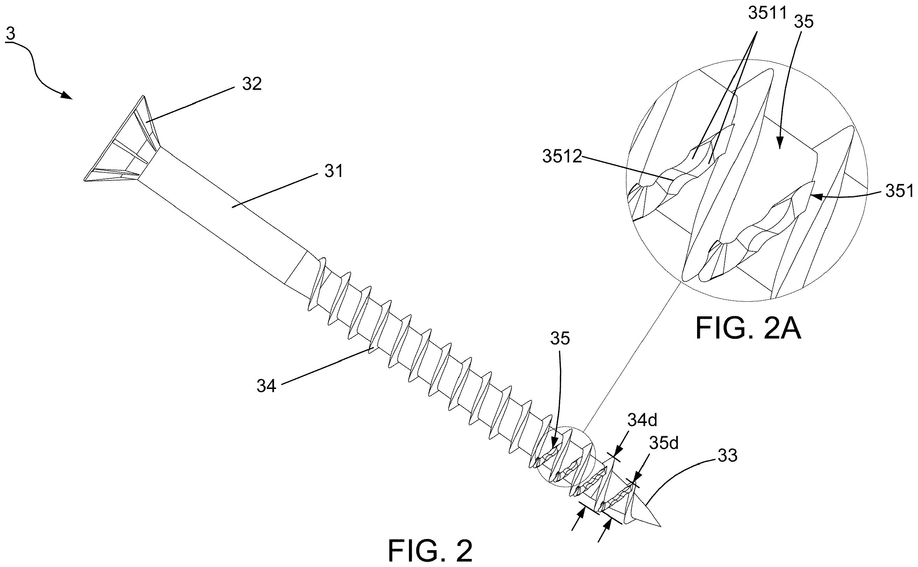

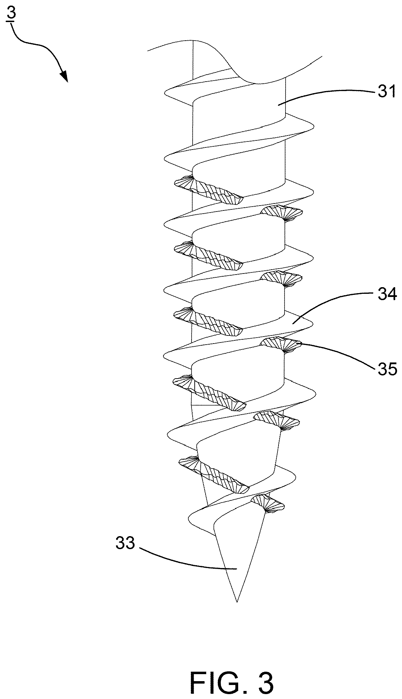

Referring to Fig. **2**, a first preferred embodiment of a speedy-screwing screw **3** of this invention is disclosed. The speedy-screwing screw **3** includes a shank **31**, a head **32** connected to one side of the shank **31**, a drilling portion **33** formed at another side of the shank **31** and opposite to the head **32**, a plurality of main threads **34** spirally disposed on the shank **31**, and a plurality of auxiliary threads **35** formed on the shank **31** between the main threads **34** and extending toward the drilling portion **33.** The main threads **34** spirally extend in a first direction. The auxiliary threads **35** spirally extend in a second direction which is reverse to the first direction of the main threads **34.** In this preferred embodiment, the main threads **34** are right hand threads. On the contrary, the auxiliary threads **35** are left hand threads. Further, it is preferable that the auxiliary threads **35** are disposed between the main threads **34** and particularly the auxiliary threads **35** alternate with part of the main threads **34**, as shown in the figures. A main diameter **34d** of the main threads **34** is larger than an auxiliary diameter **35d** of the auxiliary threads **35.** In addition, referring to Fig. **2**, each of the auxiliary threads **35** may extend slantingly between two adjacent main threads **34** so that the auxiliary threads **35** disconnect from each other. Alternatively, the auxiliary threads **35** have continuous convolutions spiraling in the second direction. In other words, the auxiliary threads **35** can be formed in connective convolutions, as shown in Fig. **3****.** Further, the extension length of the auxiliary threads **35** can be adjusted according to needs. Here takes an example that the auxiliary threads **35** slantingly extend to the drilling portion **33**. Referring to Fig. **2A**, each auxiliary thread **35** includes a plurality of cutting sections **351** connected one after another. Each cutting section **351** has two flank surfaces **3511** facing the head **32** and the drilling portion **33** respectively and a crest **3512** formed at a convergence of the two flank surfaces **3511.** Neighboring flank surfaces **3511** which face the same direction are continuously connected in reverse curves. In other words, one flank surface **3511** is an upward curve in the middle, and another flank surface **3511** adjoining the one flank surface **3511** is a concave curve in the middle to allow the connected crests **3512** to lie like waves rising and falling.

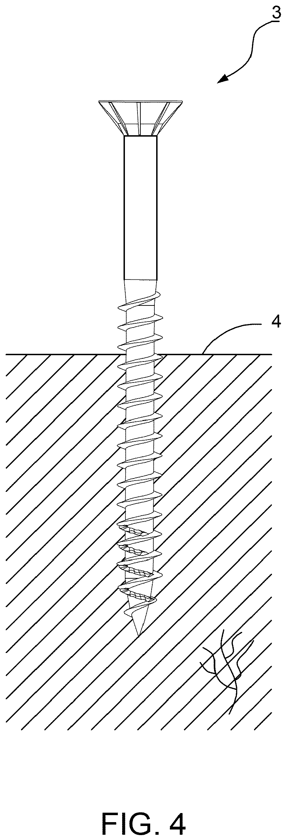

Referring to Fig. **2** and Fig. **4**, a screwing operation of the speedy-screwing screw **3** begins with positioning the drilling portion **33** against a surface of a wood object **4.** Then, the head **32** receives a rotation force from a driving tool (not shown) in order to carry out the drilling action of the drilling portion **33** and synchronously rotate the main threads **34** to execute the main cutting action of the wood object **4.** Meanwhile, the auxiliary threads **35** is also driven by the rotation force to assist the drilling portion **33** in reaming the wood object **4** and help the main threads **34** push and then break wood fibers of the wood object **4** effectively, thereby preventing the shank **31** and the drilling portion **33** from being entangled in the wood fibers, reducing the drilling resistance caused by the entanglement of wood fibers. Moreover, when the speedy-screwing screw **3** gradually screws into the wood object **4**, debris incurred during the cutting action can be excluded outwards through the main threads **34** and the auxiliary threads **35**, thereby increasing the smoothness of excluding debris. Thus, the cooperation between the main threads **34** and the auxiliary threads **35** allows the speedy-screwing screw **3** to serve the wood fibers effectively. The main threads **34** execute the main cutting action of the wood object **4**, and concurrently the auxiliary threads **35** push and then sever the wood fibers, thereby providing a dual cutting effect to avoid the entanglement of the wood fibers around the shank **31** and the drilling portion **33**, decreasing the drilling resistance incurred during the screwing operation, preventing the wood object **4** from cracking caused by continuously pressing the unduly accumulated debris, and attaining a quick screwing effect.

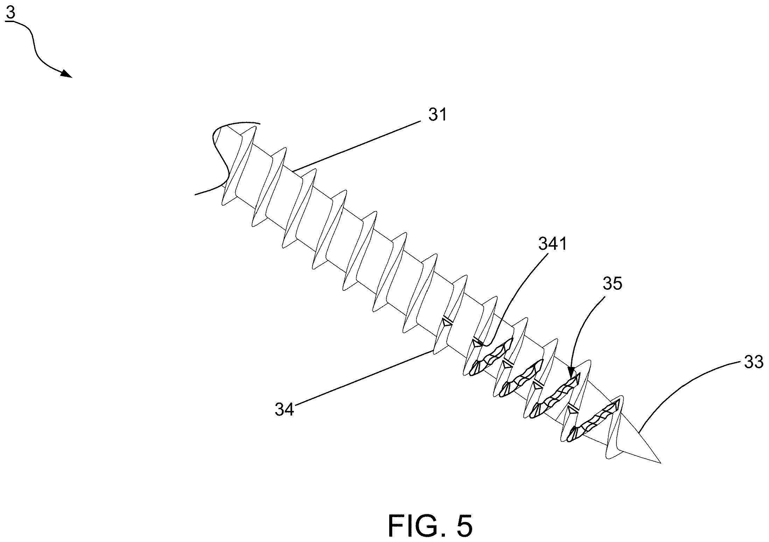

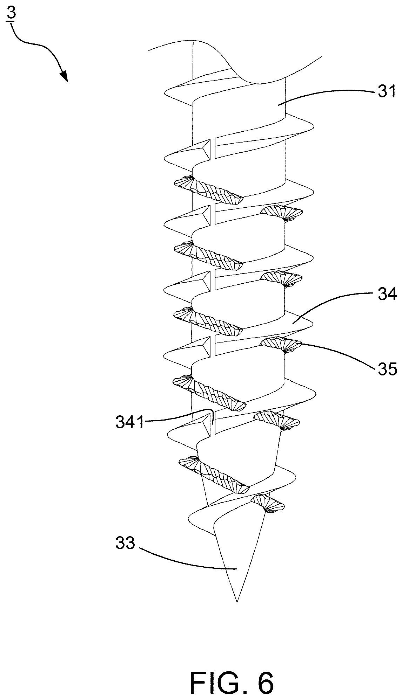

Referring to Fig. **5** shows a second preferred embodiment of the speedy-screwing screw **3** of this invention. The correlated elements and the concatenation of elements, the operation and objectives of the second preferred embodiment are the same as those of the first preferred embodiment. This embodiment is characterized in that at least one of the main threads **34** is provided with at least one slot **341** which allows the debris incurred during the cutting action to be excluded through the slot **341** smoothly. Referring to Fig. **6**, the slot **341** may be formed on the main threads **34** while the auxiliary threads **35** are formed in continuous convolutions. Hence, the debris can be excluded through not only the main threads **34** and the auxiliary threads **35**, but also the slot **341**, thereby increasing the smoothness of excluding debris, preventing the wood object **4** (not shown) from cracking caused by pressing the accumulated debris, speeding up the screwing operation greatly, and achieving the quick screwing effect.

To sum up, the speedy-screwing screw of this invention takes an advantage of the wavelike auxiliary threads which extend in the direction reverse to the direction of the main threads to push and then serve the wood fibers effectively, thereby attaining the dual cutting effect to prevent the drilling portion and the shank from being entangled in the wood fibers, reduce the drilling resistance, accelerate the screwing operation greatly, and achieve the quick screwing effect.

## Claims

1. A speedy-screwing screw (3) comprising a shank (31), a head (32) disposed at one end of said shank (31), a drilling portion (33) disposed at another end of said shank (31) and opposite to said head (32), and a plurality of main threads (34) spirally formed on said shank (31) and having main thread convolutions spiraling in a first direction;
**characterised in that** a plurality of auxiliary threads (35) are disposed on said shank (31) between said main threads (34) and extend in the direction of said drilling portion (33), said plurality of auxiliary threads (35) extending in a second direction which is reverse to said first direction of said plurality of main threads (34), a main diameter (34d) of said plurality of main threads (34) being larger than an auxiliary diameter (35d) of said plurality of auxiliary threads (35), each of said auxiliary threads (35) including a plurality of cutting sections (351) which are connected one after another, each of said cutting sections (351) including two flank surfaces (3511) facing said head (32) and said drilling portion (33) respectively and a crest (3512) formed at a junction of said two flank surfaces (3511), adjacent flank surfaces (3511) which face a same direction being continuously connected in reverse curves to allow said plurality of crests (3512) to lie like waves rising and falling.

2. The speedy-screwing screw (3) as claimed in claim 1, wherein at least one of said main threads (34) is provided with at least one slot (341).

3. The speedy-screwing screw (3) as claimed in claim 1 or 2, wherein said auxiliary threads (35) have continuous convolutions spiraling in the second direction.

4. The speedy-screwing screw (3) as claimed in claim 1 or 2, wherein each of said auxiliary threads (35) extends slantingly between two adjacent main threads (34).

## Patentansprüche

1. Schnellbauschraube (3), einen Schaft (31), einen Kopf (32), angeordnet an einem Ende des Schafts (31), einen Bohrabschnitt (33), angeordnet am anderen Ende des Schafts (31) und gegenüber dem Kopf (32), und mehrere Hauptgewindegänge (34) umfassend, die spiralförmig an dem Schaft (31) gebildet sind und Hauptgewindegangumläufe aufweisen, die sich in einer erste Richtung winden,
**dadurch gekennzeichnet, dass** an dem Schaft (31) zwischen den Hauptgewindegängen (34) mehrere Hilfsgewindegänge (35) angeordnet sind und sich in die Richtung des Bohrabschnitts (33) erstrecken, wobei sich die mehreren Hilfsgewindegänge (35) in eine zweite Richtung erstrecken, die umgekehrt zu der ersten Richtung der mehreren Hauptgewindegänge (34) liegt, wobei ein Hauptdurchmesser (34d) der mehreren Hauptgewindegänge (34) größer als ein Hilfsdurchmesser (35d) der mehreren Hilfsgewindegänge (35) ist, wobei jeder der Hilfsgewindegänge (35) mehrere Schneidteilabschnitte (351) beinhaltet, die sich einer an den anderen anschließen, wobei jeder der Schneideteilabschnitte (351) zwei Flankenflächen (3511), die zum Kopf (32) beziehungsweise dem Bohrabschnitt (33) weisen, und einen Scheitel (3512) beinhaltet, der an einer Zusammenführung der zwei Flankenflächen (3511) gebildet ist, wobei benachbarte Flankenflächen (3511), die in die gleiche Richtung weisen, in Umkehrkurven durchgehend verbunden sind, um zu ermöglichen, dass die mehreren Scheitel (3512) wie aufsteigende und fallende Wellen liegen.

2. Schnellbauschraube (3) nach Anspruch 1, wobei mindestens einer der Hauptgewindegänge (34) mit mindestens einem Schlitz (341) versehen ist.

3. Schnellbauschraube (3) nach Anspruch 1 oder 2, wobei die Hilfsgewindegänge (35) durchgehende Umläufe aufweisen, die sich in die zweite Richtung winden.

4. Schnellbauschraube (3) nach Anspruch 1 oder 2, wobei sich jeder der Hilfsgewindegänge (35) schräg zwischen zwei benachbarten Hauptgewindegänge (34) erstreckt.

## Revendications

1. Vis à vissage rapide (3) comprenant une tige (31), une tête (32) disposée à une extrémité de ladite tige (31), une partie de perçage (33) disposée à une autre extrémité de ladite tige (31) et à l'opposé de ladite tête (32), et une pluralité de filets principaux (34) formés en spirale sur ladite tige (31) et ayant des convolutions de filet principal en spirale dans une première direction ;
**caractérisée par le fait qu'**une pluralité de filets auxiliaires (35) sont disposés sur ladite tige (31) entre lesdits filets principaux (34) et s'étendent dans la direction de ladite partie de perçage (33), ladite pluralité de filets auxiliaires (35) s'étendant dans une seconde direction qui est l'inverse de ladite première direction de ladite pluralité de filets principaux (34), un diamètre principal (34d) de ladite pluralité de filets principaux (34) étant plus grand qu'un diamètre auxiliaire (35d) de ladite pluralité de filets auxiliaires (35), chacun desdits filets auxiliaires (35) comprenant une pluralité de sections de coupe (351) qui sont reliées les unes à la suite des autres, chacune desdites sections de coupe (351) comprenant deux surfaces de flanc (3511) faisant face à ladite tête (32) et à ladite partie de perçage (33), respectivement, et une crête (3512) formée à une jonction desdites deux surfaces de flanc (3511), les surfaces de flanc adjacentes (3511) qui font face dans une même direction étant reliées de manière continue en courbes inverses pour permettre à ladite pluralité de crêtes (3512) de ressembler à des vagues montantes et descendantes.

2. Vis à vissage rapide (3) selon la revendication 1, dans laquelle au moins un desdits filets principaux (34) comporte au moins une fente (341).

3. Vis à vissage rapide (3) selon la revendication 1 ou 2, dans laquelle lesdits filets auxiliaires (35) ont des convolutions continues en spirale dans la seconde direction.

4. Vis à vissage rapide (3) selon la revendication 1 ou 2, dans laquelle chacun desdits filets auxiliaires (35) s'étend de manière inclinée entre deux filets principaux adjacents (34).
